# EUROPÄISCHE PATENTSCHRIFT

(11) **EP 2 249 073 B1**
(45) Veröffentlichungstag und Bekanntmachung des Hinweises auf die Patenterteilung: **19.06.2013**
(21) Anmeldenummer: 10160660.6
(22) Anmeldetag: 22.04.2010
(51) Int. Cl.: F16L 37/10, F16L 37/12, F16L 21/08

(54) **Steckverbindungsanordnung**
Connector assembly
Raccord enfiché

(30) Priorität: 09.05.2009 DE 102009020577
(43) Veröffentlichungstag der Anmeldung: 10.11.2010
(73) Patentinhaber: VERITAS AG, 63571 Gelnhausen (DE); Muhr und Bender KG, 57439 Attendorn (DE)
(72) Erfinder: Keller, Uwe, 63571, Gelnhausen (DE); Kari, Artur, 63571, Gelnhausen (DE); Funke, Joerg, 57413, Finnentrop (DE)
(74) Vertreter: Witte, Weller & Partner

(56) Entgegenhaltungen:
- EP-A1- 0 452 172
- EP-A1- 0 924 453
- EP-A1- 1 821 022
- DE-A1- 19 621 670
- DE-A1-102007 045 023
- US-A- 1 477 440

## Beschreibung

Die vorliegende Erfindung betrifft ein Steckverbindungsverfahren bzw. eine Steckverbindungsanordnung zur Verbindung eines ersten Hohlkörpers wie eines Rohrstutzens mit einem zweiten Hohlkörper wie einem Schlauch mittels einer Schelle, gemäß dem Oberbegriff des Anspruchs 1 bzw. Anspruchs 2.

Eine derartige Steckverbindungsanordnung ist aus dem Dokument DE 196 21 670 A1 bekannt.

Die DE 196 21 670 A1 offenbart den Oberbegriff von Anspruch 1 und 2, und zeigt eine Steckverbindungsanordnung zur Verbindung eines Schlauchendes mit Rohrstutzen, wobei an dem Rohrstutzen eine Schelle vormontiert ist, die beim Aufschieben des Schlauchendes axial in eine Endmontageposition versetzt wird. Alternativ ist gezeigt, die Federschelle in eine Endmontageposition zu verdrehen. In der Endmontageposition ist die Schelle in axialer Richtung formschlüssig mit dem Rohrstutzen und kraftschlüssig mit dem Schlauchende verbunden.

Aus der DE 195 06 144 C1 ist eine Steckverbindungsanordnung bekannt, bei der eine Federschelle unter Spannung aufgeweitet wird und in diesem Zustand mittels einer Klammer gehalten wird. In dieser Vormontageposition kann die Federklemme ferner an einem Sicherungsring festgelegt sein, der mit dem Rohrstutzen verbunden ist.

Das Dokument DE 10 2006 047 882 B3 offenbart eine weitere Steckverbindungsanordnung, bei der eine Hülse mit einem Schlauchende klemmend verbunden ist. Ein Verbindungsring ist in einer Vormontageposition mit der Hülse verrastet. Beim Aufschieben des Schlauchendes auf einen Stutzen rastet der Verbindungsring ferner in eine Umfangsnut am Außenumfang des Stutzens.

Vor dem obigen Hintergrund besteht eine Aufgabe der Erfindung darin, eine verbesserte Steckverbindungsanordnung und ein entsprechendes Steckverbindungsverfahren anzugeben, die insbesondere eine einfache und sichere Endmontage zur Verbindung der zwei Hohlkörper ermöglichen.

Diese Aufgabe wird durch ein Steckverbindungsverfahren gemäß Anspruch 1 und durch eine Steckverbindungsanordnung gemäß Anspruch 2 gelöst.

Das erfindungsgemäße Verfahren zum Verbinden eines ersten Hohlkörpers wie eines Rohrstutzens mit einem zweiten Hohlkörper wie einem Schlauch mittels einer Federschelle beinhaltet, die Federschelle an einem Vormontageabschnitt des ersten Hohlkörpers vorzumontieren, den ersten und den zweiten Hohlkörper axial ineinander zu stecken, und schließlich die Federschelle relativ zu dem ersten Hohlkörper zu verdrehen, so dass die Federschelle in eine Endmontageposition gelangt.

Die Steckverbindungsanordnung kann mit wenigen Bauteilen realisiert werden. Die Endmontage kann durch einen einfachen Verdrehvorgang der Federschelle erfolgen. Ferner kann hierdurch eine sicherere Vormontage der Federschelle an dem ersten Hohlkörper erzielt werden.

Von besonderem Vorzug ist es, wenn der Vormontageabschnitt einen größeren Außendurchmesser aufweist als der Endmontageabschnitt, so dass der zweite Hohlkörper auf den ersten Hohlkörper derart axial aufgeschoben werden kann, dass zumindest ein Abschnitt des zweiten Hohlkörpers radial innerhalb der Federschelle angeordnet ist.

Hierdurch können die Hohlkörper einfach ineinander geschoben werden, und die Federschelle kann anschließend an dem Außenumfang des zweiten Hohlkörpers angreifen, um die Steckverbindung herzustellen.

Ferner ist es vorteilhaft, wenn der Vormontageabschnitt und der Endmontageabschnitt in Umfangsrichtung über eine Umfangskontur miteinander verbunden sind.

Hierdurch kann der Verdrehvorgang zum Einrichten der Endmontageposition gezielt über die Umfangskontur beeinflusst werden. Die Umfangskontur ist ferner bevorzugt stetig ausgebildet, so dass keine rein radial verlaufenden Absätze oder dergleichen enthalten sind. Dies ermöglicht eine größere Kontrolle während des Verdrehvorgangs.

Dabei ist es von besonderem Vorzug, wenn die Umfangskontur zwischen dem Vormontageabschnitt und dem Endmontageabschnitt einen Sicherungsabschnitt aufweist.

Hierdurch kann gewährleistet werden, dass die Schelle sich beispielsweise während eines Transportes nicht versehentlich aus der Vormontageposition lösen kann. Insbesondere kann hierdurch verhindert werden, dass die Schelle während eines solchen Transportes oder dergleichen versehentlich bereits in die Endmontageposition gelangt.

Dabei ist es von besonderem Vorzug, wenn der Sicherungsabschnitt einen größeren Außendurchmesser aufweist als der Vormontageabschnitt.

Hierdurch kann der Sicherungsabschnitt konstruktiv auf einfache Weise realisiert werden, insbesondere als Teil der Umfangskontur.

Die Federschelle wird durch radiales Aufweiten gespannt.

Bei dieser Ausführungsform kann die Federschelle aus ihrem entspannten Zustand zunächst radial aufgeweitet werden, um in die Vormontageposition versetzt zu werden. In der Vormontageposition wird die Federschelle dann durch eine radial nach innen wirkende elastische Rückstellkraft gehalten.

Demzufolge ist es bevorzugt, wenn die Federschelle in der Vormontageposition unter Spannung steht.

Insgesamt ist es ferner vorteilhaft, wenn die Federschelle wenigstens eine erste Radialzunge aufweist, die in der Vormontageposition und in der Endmontageposition in eine Umfangsnut des ersten Hohlkörpers greift.

Durch diese Maßnahme kann gewährleistet werden, dass die Federschelle in der Vormontageposition und in der Endmontageposition in axialer Richtung an dem ersten Hohlkörper gesichert ist. weil die Schelle eine Federschelle ist, wird die Radialzunge zudem in die Umfangsnut elastisch eingedrückt, so dass die Transportsicherheit noch weiter erhöht wird.

Generell ist es denkbar, dass nur eine einzelne erste Radialzunge vorgesehen ist, die sich z.B. bis zu 180° über den Umfang erstrecken kann. Besonders bevorzugt ist es jedoch, wenn eine Mehrzahl erster Radialzungen über den Umfang verteilt an der Federschelle vorgesehen sind.

Gemäß einer weiteren bevorzugten Ausführungsform weist die Federschelle ferner wenigstens eine zweite Radialzunge auf, die in der Endmontageposition in eine Radialnut des zweiten Hohlkörpers greift.

Bei dieser Ausführungsform kann insbesondere dann, wenn die erste Radialzunge in der Endmontageposition in eine Umfangsnut des ersten Hohlkörpers greift, über die Federschelle eine formschlüssige Verbindung in axialer Richtung zwischen dem ersten Hohlkörper und dem zweiten Hohlkörper eingerichtet werden. Demzufolge kann die Steckverbindungsanordnung eine hohe Verbindungssicherheit aufweisen.

Auch die zweite Radialzunge kann als einzelne Radialzunge ausgebildet sein, wie oben beschrieben. Bevorzugt ist jedoch auch in diesem Fall eine Mehrzahl von zweiten Radialzungen vorgesehen, die über den Umfang der Federschelle verteilt angeordnet sind.

Von besonderem Vorzug ist es dabei, wenn die zweite Radialzunge kürzer ist als die erste Radialzunge.

Hierdurch wird es vereinfacht, die Hohlkörper ineinander zu stecken, bevor die Federschelle von der Vormontageposition in die Endmontageposition verdreht wird.

Insgesamt ist es ferner vorteilhaft, wenn der erste und/oder der zweite Hohlkörper eine Umfangsnut aufweist, in die ein Dichtungsring eingelegt ist und die in dem Endmontagezustand von dem anderen Hohlkörper überdeckt ist, um das Innere der Hohlkörper gegenüber der Umgebung abzudichten.

Hierdurch kann eine unmittelbare Dichtwirkung zwischen dem ersten Hohlkörper und dem zweiten Hohlkörper eingerichtet werden, so dass eine hohe Dichtigkeit erzielt werden kann.

Ferner ermöglicht die erfindungsgemäße Steckverbindungsanordnung je nach Ausführungsform auch eine sichere Inspektion der fertiggestellten Verbindung. Mit anderen Worten kann relativ leicht von außen erfasst werden, ob die Federschelle in der korrekten Endmontageposition ist. Dies gilt insbesondere dann, wenn eine erste und eine zweite Radialzunge in entsprechende Nuten des ersten Hohlkörpers bzw. des zweiten Hohlkörpers greifen. Dies ist von außen gut erkennbar und kann daher leicht überprüft werden.

Ausführungsbeispiele der Erfindung sind in der Zeichnung dargestellt und werden in der nachfolgenden Beschreibung näher erläutert. Es zeigen:
- Fig. 1: eine schematische Längsschnittansicht einer Ausführungsform einer er- findungsgemäßen Steckverbindungsanordnung mit einer Federschelle in einer Vormontageposition;
- Fig. 2: die Steckverbindungsanordnung der Fig. 1 mit der Federschelle in einer End- montageposition;
- Fig. 3: eine Schnittansicht entlang der Linie III-III der Fig. 1;
- Fig. 4: eine schematische Querschnittsansicht durch eine Steckverbindungs- anordnung gemäß einer weiteren Ausführungsform der Erfindung;
- Fig. 5: eine Draufsicht auf eine Steckverbindungsanordnung gemäß einer weite- ren Ausführungsform der Erfindung; und
- Fig. 6: eine Längsschnittansicht durch die Steckverbindungsanordnung der Fig. 5.

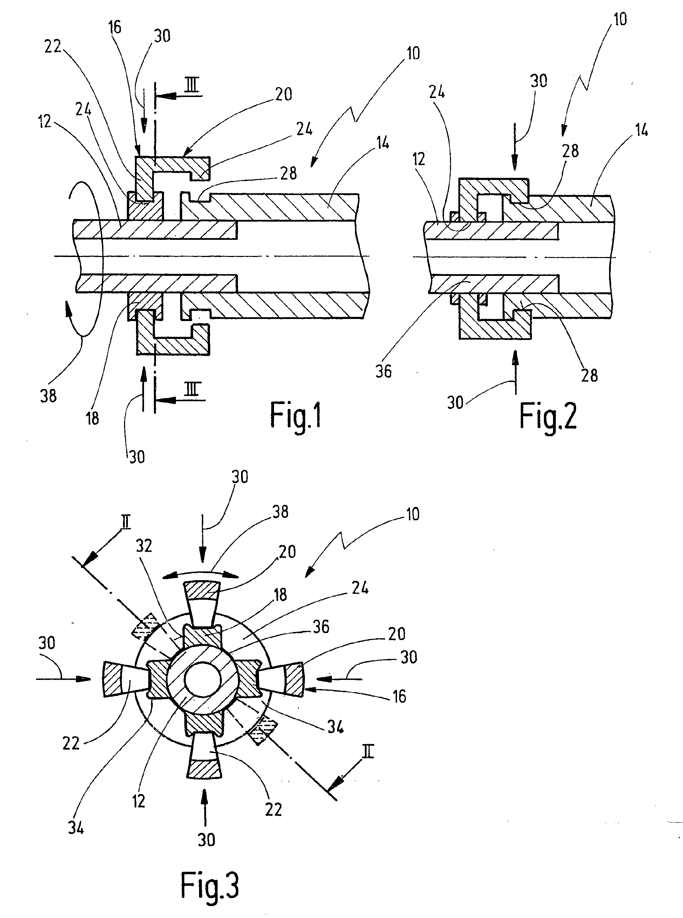

In den Figuren 1 bis 3 ist eine Steckverbindungsanordnung generell mit 10 bezeichnet.

Die Steckverbindungsanordnung 10 beinhaltet einen Rohrstutzen 12, der beispielsweise Teil eines Turboladers sein kann. Ferner weist die Steckverbindungsanordnung 10 einen Schlauch 14 auf, bei dem es sich beispielsweise um eine Ladeluftleitung handeln kann. Die Steckverbindungsanordnung 10 beinhaltet ferner eine Federschelle 16, mittels der der Rohrstutzen 12 und der Schlauch 14 im ineinandergesteckten Zustand fixiert werden können.

Der Rohrstutzen 12 weist dabei einen Außendurchmesser auf, der an den Innendurchmesser des Schlauches 14 angepasst ist, so dass sich der Schlauch 14 in axialer Richtung über den Rohrstutzen 12 schieben lässt.

Der Rohrstutzen 12 weist einen Vormontageabschnitt 18 auf, an dem die Federschelle 16 in einer Vormontageposition festgelegt ist, wie es in Fig. 1 dargestellt ist. Der Vormontageabschnitt 18 kann durch ein separates, am Außenumfang des Rohrstutzens 12 befestigtes Bauteil gebildet sein, kann jedoch auch einstückig mit dem Rohrstutzen 12 ausgebildet sein.

Die Federschelle 16 weist über den Umfang verteilt eine Mehrzahl, in der dargestellten Ausführungsform vier Halteabschnitte 20 auf, die jeweils um 90° versetzt gegeneinander angeordnet sind, wie es in Fig. 3 gezeigt ist. In Fig. 1 sind zwei der Halteabschnitte 20 gezeigt. Jeder Halteabschnitt weist eine erste Radialzunge 22 auf, die in eine Umfangsnut 24 des Vormontageabschnittes 18 greift. Hierdurch wird die Federschelle 16 an dem Rohrstutzen 12 in der gezeigten Vormontageposition axial fixiert. Die Federschelle 16 wird hierzu radial aufgeweitet, um die ersten Radialzungen 22 anschließend in die Umfangsnut 24 einzuführen, wobei die Federschelle 16 in der Vormontageposition unter Vorspannung steht.

Die Halteabschnitte 20 beinhalten ferner jeweils eine zweite Radialzunge 26, die in axialer Richtung hin zu dem freien Ende des Rohrstutzens 12 versetzt angeordnet sind. Die zweiten Radialzungen 26 sind dabei so angeordnet, dass zumindest ein Abschnitt des Schlauches 14, der auf den Rohrstutzen 12 aufgeschoben ist, in radialer Richtung innerhalb der ersten Radialzungen 22 liegt. Die zweiten Radialzungen 26 sind vorzugsweise kürzer als die ersten Radialzungen 22. Ferner sind die zweiten Radialzungen 26 in der in Fig. 1 gezeigten Vormontageposition so angeordnet, dass der Schlauch 14 im Wesentlichen berührungsfrei an den zweiten Radialzungen 26 vorbeigeführt werden kann.

An dem Außenumfang des Schlauches 24 ist eine Radialnut 28 ausgebildet, in die die zweiten Radialzungen 26 greifen, wenn die Federschelle 16 sich in einer Endmontageposition befindet, wie sie in Fig. 2 gezeigt ist.

Hierdurch können der Rohrstutzen 12 und der Schlauch 14 in axialer Richtung über die Federschelle 16 formschlüssig miteinander verbunden werden. Sowohl in der Vormontageposition als auch in der Endmontageposition wirkt dabei eine in radialer Richtung nach innen weisende Federspannung 30, die die Federschelle 16 zum einen in der Umfangsnut 24 bzw. der Radialnut 28 hält und zum anderen eine Radialkraft auf den Abschnitt ausübt, bei dem der Schlauch 14 den Rohrstutzen 12 übergreift. Folglich kann hierdurch sowohl ein axialer Formschluss als auch eine gewisse Dichtwirkung erzielt werden.

Wie es insbesondere in Fig. 3 zu sehen ist, bildet der Boden der Umfangsnut 24 eine Umfangskontur 32. Die Umfangskontur 32 weist dabei über den Umfang verteilt vier Vormontageabschnitte 18 mit einem relativ großen Außendurchmesser auf. Ferner weist die Umfangskontur 32 dazwischenliegend vier Endmontageabschnitte 36 mit einem deutlich kleineren Außendurchmesser auf. Zwischen den Vormontageabschnitten 18 und den Endmontageabschnitten 36 ist jeweils ein Sicherungsabschnitt 34 vorgesehen, der einen noch größeren Außendurchmesser als der Vormontageabschnitt 18 aufweist. Demzufolge wird die Federschelle 16 in der in Fig. 1 und 3 gezeigten Vormontageposition auch in der Umfangsrichtung 38 gehalten.

Um die Federschelle 16 von der Vormontageposition, die in Fig. 1 und 3 gezeigt ist, in die Endmontageposition zu verbringen, die in Fig. 2 gezeigt ist, ist es lediglich notwendig, die Federschelle 16 in Bezug auf den Rohrstutzen 12 zu verdrehen. Dabei fahren die ersten Radialzungen 22 mit ihrem Innenumfang entlang der Umfangskontur 32. Hierbei wird zunächst jeweils ein Sicherungsabschnitt 34 von den ersten Radialzungen 22 überfahren. Dabei weitet sich die Federschelle 16 radial auf, so dass ein etwas erhöhter Kraftaufwand hierzu notwendig ist. Anschließend werden die ersten Radialzungen 22 durch die Federspannung 30 in die Endmontageabschnitte 36 gedrückt, was in Fig. 3 für zwei der Radialzungen 22 gestrichelt dargestellt ist. Ein Schnitt entlang der Linie II-II in Fig. 3 entspricht der Darstellung der Fig. 2.

Die Federschelle 16 kann in Umfangsrichtung 38 im Wesentlichen durchgehend aus einem Stück ausgebildet sein. Bevorzugt weist die Federschelle 16 dabei ein erstes Schellenende und ein zweites Schellenende auf, die sich in Umfangsrichtung 38 überlappen, so dass ein Aufweiten der Federschelle 16 zum Einsetzen in die Vormontageposition durch Zusammendrücken der Schellenenden möglich ist.

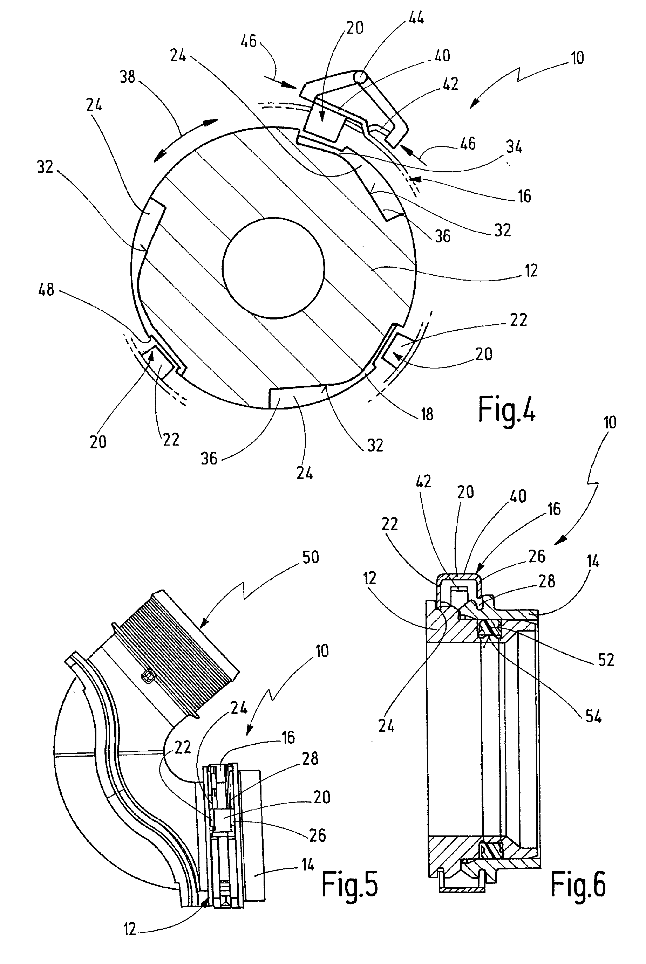

Eine derartige Ausführungsform ist in Fig. 4 gezeigt. Die Steckverbindungsanordnung 10 der Fig. 4 entspricht hinsichtlich Aufbau und Funktionsweise generell der Steckverbindungsanordnung 10 der Fig. 1 bis 3. Gleiche Elemente weisen daher gleiche Bezugsziffern auf. Im Folgenden werden im Wesentlichen die Unterschiede erläutert.

Die Federschelle 16 der Fig. 4 weist ein erstes Schellenende 40 und ein zweites Schellenende 42 auf, die einander überlappen. Mittels einer Spannzange oder einer sonstigen Greifvorrichtung 44 können die Schellenenden 40, 42 ergriffen und zusammengedrückt werden, wie es durch eine Aufweitkraft 46 angedeutet ist. Hierdurch wird die Federschelle 16 in radialer Richtung aufgeweitet, so dass sie in die Vormontageposition an dem Rohrstutzen 12 verbringbar ist.

Dabei weist der Rohrstutzen 12 für jeden der Halteabschnitte 20, der jeweils eine erste Radialzunge 22 und eine zweite Radialzunge 26 aufweist, jeweils eine Axialnut 48 auf, so dass die ersten Radialzungen 22 relativ einfach in die Umfangsnut 24 eingeführt werden können. Die Umfangsnut 24 ist bei der Steckverbindungsanordnung 10 der Fig. 4 in Umfangsrichtung 38 nicht durchgehend ausgebildet sondern in eine Mehrzahl von Abschnitten unterteilt. Die Anzahl der Abschnitte entspricht der Anzahl der Halteabschnitte 20; in der Darstellung der Fig. 4 sind es drei Halteabschnitte, die jeweils etwa um 120° gegeneinander versetzt sind.

Die Federschelle 16 ist aus einem sich in Umfangsrichtung 38 erstreckenden Federband gebildet, wobei ein Halteabschnitt 20 an dem ersten Schellenende 40 ausgebildet ist. Das zweite Schellenende 42 durchsetzt in radialer Richtung eine in Fig. 4 nicht näher dargestellte Ausnehmung des ersten Schellenendes 40, so dass die Spannzange 44 leicht an den Schellenenden 40, 42 angreifen kann.

In den Fig. 5 und 6 ist eine weitere Ausführungsform einer Steckverbindungsanordnung 10 gezeigt, die hinsichtlich Aufbau und Funktionsweise generell der Steckverbindungsanordnung der Fig. 1 bis 3 entspricht. Gleiche Elemente sind daher mit gleichen Bezugsziffern versehen. Im Folgenden werden im Wesentlichen lediglich die Unterschiede erläutert.

Zum einen ist in Fig. 5 zu erkennen, dass der Rohrstutzen 12 gemäß Fig. 5 Teil eines Rohrs 50 ist, das wiederum Teil einer Ladeluftanordnung für Turbolader sein kann. Alternativ hierzu kann das Rohr 50 dann, wenn es über die Steckverbindungsanordnung 10 mit dem zweiten Hohlkörper 14 verbunden ist, einen Schalldämpfer bilden.

Wie es in Fig. 6 gezeigt ist, weist der Rohrstutzen 12 an seinem Außenumfang eine Umfangsnut 54 auf, in die ein Dichtungsring 52 wie ein O-Ring eingesetzt ist. Die Umfangsnut 54 und der darin eingelegte Dichtungsring 52 werden von dem Schlauchabschnitt überdeckt, der auf den Rohrstutzen 12 aufgeschoben ist. Demzufolge kann eine direkte Abdichtung zwischen dem Schlauch 14 und dem Rohrstutzen 12 erzielt werden. Die Abdichtung kann durch die in der Endmontageposition wirkende Federspannung 30 (in Fig. 6 nicht dargestellt) erhöht werden.

Der Schlauch 14 ist so dimensioniert, dass er axial gegen eine in Fig. 6 nicht näher bezeichnete Ringschulter des Rohrstutzens 12 anschlägt. In dieser Position liegt die Radialnut 28 innerhalb der zweiten Radialzungen 26, so dass, ausgehend von der in Fig. 6 gezeigten Vormontageposition, die Endmontageposition leicht durch Verdrehen der Federschelle 16 eingerichtet werden kann.

Obgleich in den oben beschriebenen Ausführungsformen die Federschelle an einem Rohrstutzen vormontiert ist, ist es auch möglich, die Federschelle an dem Schlauch vorzumontieren. In gleicher Weise ist es möglich, anstelle eines Schlauches und eines Rohrstutzens zwei Rohrstutzen oder zwei Schläuche miteinander zu verbinden, wobei die Federschelle jeweils an einem der zwei Elemente vormontiert sein kann.

Schließlich ist es auch denkbar, eine Federschelle 16 ohne zweite Radialzungen 26 auszubilden. In diesem Fall kann der Außenumfang des Schlauches 14 auch ohne Radialnut 28 ausgebildet sein. Hier wird die Verbindung zwischen dem Rohrstutzen 12 und dem Schlauch 14 im Wesentlichen kraftschlüssig über die Federschelle 16 eingerichtet, und zwar mittels der Federspannung 30.

## Patentansprüche

1. Verfahren zum Verbinden eines ersten Hohlkörpers (12) wie eines Rohrstutzens mit einem zweiten Hohlkörper (14) wie einem Schlauch mittels einer radial aufweitbaren Federschelle (16), die wenigstens eine erste Radialzunge (22) aufweist, mit den Schritten:
- Vormontieren der Federschelle (16) an einem Vormontageabschnitt (18) des ersten Hohlkörpers (12), um eine Vormontageposition festzulegen ,
- axiales Ineinanderstecken des ersten und des zweiten Hohlkörpers (12, 14), und
- Verdrehen der Federschelle (16) relativ zu dem ersten Hohlkörper (12), so dass die Federschelle in eine Endmontageposition gelangt, in der die erste Radialzunge (22) in eine Umfangsnut (24) des ersten Hohlkörpers (12) greift,
**dadurch gekennzeichnet, dass**
die erste Radialzunge (22) auch in der Vormontageposition in die Umfangsnut (24) des ersten Hohlkörpers (12) greift, so dass die Federschelle (16) in der Vormontageposition in axialer Richtung an dem ersten Hohlkörper (12) gesichert ist.

2. Steckverbindungsanordnung (10) zur Durchführung des Verfahrens nach Anspruch 1, mit einem ersten Hohlkörper (12) wie ein Rohrstutzen und einem zweiten Hohlkörper (14) wie ein Schlauch, sowie mit einer radial aufweitbaren Federschelle (16) zur Verbindung des ersten Hohlkörpers (12) mit dem zweiten Hohlkörper (14), wobei der erste Hohlkörper (12) einen Vormontageabschnitt (18) an dem die Federschelle (16) in einer Vormontageposition vormontierbar ist und wobei der erste Holkörper (12) einen Endmontageabschnitt (36) aufweist, an dem die Federschelle (16) zur Verbindung des ersten Hohlkörpers (12) mit dem zweiten Hohlkörper (14) in einer Endmontageposition festgelegt ist, wobei der erste Abschnitt (18) und der Endmontageabschnitt (36) in Umfangsrichtung (38) des ersten Hohlkörpers (12) versetzt angeordnet sind, so dass die Federschelle (16) durch Verdrehen gegenüber dem ersten Hohlkörper (12) von der Vormontageposition in die Endmontageposition versetzbar ist, wobei die Federschelle (16) wenigstens eine erste Radialzunge (22) aufweist, die in der Endmontageposition in eine Umfangsnut (24) des ersten Hohlkörpers (12) greift,
**dadurch gekennzeichnet, dass**
die erste Radialzunge (22) auch in der Vormontageposition in die Umfangsnut (24) des ersten Hohlkörpers (12) greift, so dass die Federschelle (16) in der Vormontageposition in axialer Richtung an dem ersten Hohlkörper (12) gesichert ist.

3. Steckverbindungsanordnung nach Anspruch 2, **dadurch gekennzeichnet, dass** der Vormontageabschnitt (18) einen größeren Außendurchmesser aufweist als der Endmontageabschnitt (36), so dass der zweite Hohlkörper (14) auf den ersten Hohlkörper (12) derart axial aufgeschoben werden kann, dass zumindest ein Abschnitt des zweiten Hohlkörpers (14) radial innerhalb der in der Vormontageposition befindlichen Schelle (16) angeordnet ist.

4. Steckverbindungsanordnung nach Anspruch 2 oder 3, **dadurch gekennzeichnet, dass** der Vormontageabschnitt (18) und der Endmontageabschnitt (36) in Umfangsrichtung über eine Umfangskontur (32) miteinander verbunden sind.

5. Steckverbindungsanordnung nach Anspruch 4, **dadurch gekennzeichnet, dass** die Umfangskontur (32) zwischen dem Vormontageabschnitt (18) und dem Endmontageabschnitt (36) einen Sicherungsabschnitt (34) aufweist.

6. Steckverbindungsanordnung nach Anspruch 5, **dadurch gekennzeichnet, dass** der Sicherungsabschnitt (34) einen größeren Außendurchmesser aufweist als der Vormontageabschnitt (18).

7. Steckverbindungsanordnung nach einem der Ansprüche 2-6, **dadurch gekennzeichnet, dass** die Federschelle (16) in der Vormontageposition unter Spannung steht.

8. Steckverbindungsanordnung nach einem der Ansprüche 2 bis 7, **dadurch gekennzeichnet, dass** die Federschelle (16) ferner wenigstens eine zweite Radialzunge (26) aufweist, die in der Endmontageposition in eine Radialnut (28) des zweiten Hohlkörpers (14) greift.

9. Steckverbindungsanordnung nach Anspruch 8, **dadurch gekennzeichnet, dass** die zweite Radialzunge (26) kürzer ist als die erste Radialzunge (22).

10. Steckverbindungsanordnung nach einem der Ansprüche 2 bis 9, **dadurch gekennzeichnet, dass** der erste und/oder der zweite Hohlkörper (12,14) eine Umfangsnut (54) aufweist, in die ein Dichtungsring (52) eingelegt ist und die in dem Endmontagezustand von dem anderen Hohlkörper (12,14) überdeckt ist, um das Innere der Hohlkörper (12, 14) gegenüber der Umgebung abzudichten.

## Claims

1. Method for connecting a first hollow body (12), such as a pipe socket, to a second hollow body (14), such as a hose, by means of a radially expandable spring clip (16), which clip (16) comprises at least a first radial tongue (22), comprising the steps:
- pre-assembly of the spring clip (16) on a pre-assembly portion (18) of the first hollow body (12), so as to determine a pre-assembly position,
- axial fitting-together of the first and the second hollow body (12, 14), and
- twisting of the spring clip (16) relative to the first hollow body (12), so that the clip ends up in a final assembly position, in which the first radial tongue (22) engages in a peripheral groove (24) of the first hollow body (12),
**characterized in that**
the first radial tongue (22) engages also in the pre-assembly position in the peripheral groove (24) of the first hollow body (12) so that the spring clip (16), in the pre-assembly position, is secured in the axial direction on the first hollow body (12).

2. Plug connection arrangement (10) for conducting the method of claim 1, comprising a first hollow body (12), such as a pipe socket, and a second hollow body (14), such as a hose, as well as a radially expandable spring clip (16) for connecting the first hollow body (12) with the second hollow body (14), wherein the first hollow body (12) has a pre-assembly portion (18), on which the spring clip (16) can be pre-assembled in a pre-assembly position, and wherein the first hollow body (12) has a final assembly portion (36), to which the spring clip (16) for connecting the first hollow body (12) to the second hollow body (14) is secured in a final assembly position, the first portion (18) and the final assembly portion (36) are arranged offset in the peripheral direction (38) of the first hollow body (12), so that the spring clip (16) can be transferred from the pre-assembly position into the final assembly position by twisting relative to the first hollow body (12), wherein the spring clip (16) has at least one first radial tongue (22), which in the final assembly position engages in a peripheral groove (24) of the first hollow body (12),
**characterized in that**
the first radial tongue (22) engages also in the pre-assembly position in the peripheral groove (24) of the first hollow body (12), so that the spring clip (16), in the pre-assembly position is secured in the axial direction on the first hollow body (12).

3. Plug connection arrangement according to Claim 2, **characterized in that** the pre-assembly portion (18) has a larger outer diameter than the final assembly portion (36), so that the second hollow body (14) can be slipped axially onto the first hollow body (12) in such a way that at least a portion of the second hollow body (14) is disposed radially within the clip (16) located in the pre-assembly position.

4. Plug connection arrangement according to Claim 2 or 3, **characterized in that** the pre-assembly portion (18) and the final assembly portion (36) are connected to each other in the peripheral direction by a peripheral contour (32).

5. Plug connection arrangement according to Claim 4, **characterized in that** the peripheral contour (32) has between the pre-assembly portion (18) and the final assembly portion (36) a locking portion (34).

6. Plug connection arrangement according to Claim 5, **characterized in that** the locking portion (34) has a larger outer diameter than the pre-assembly portion (18).

7. Plug connection arrangement according to one of Claims 2-6, **characterized in that** the spring clip (16), in the pre-assembly position, is tensioned.

8. Plug connection arrangement according to one of Claims 2 to 7, **characterized in that** the spring clip (16) additionally has at least one second radial tongue (26), which in the final assembly position engages in a radial groove (28) of the second hollow body (14).

9. Plug connection arrangement according to Claim 8, **characterized in that** the second radial tongue (26) is shorter than the first radial tongue (22).

10. Plug connection arrangement according to one of Claims 1 to 9, **characterized in that** the first and/or the second hollow body (12, 14) has a peripheral groove (54), in which a sealing ring (52) is inserted and which in the final assembly state is covered by the other hollow body (12, 14) in order to seal the inside of the hollow bodies (12, 14) with respect to the environment.

## Revendications

1. Procédé pour connecter un premier corps creux (12) tel qu'une tubulure à un deuxième corps creux (14) tel qu'un tuyau souple au moyen d'un collier à ressort (16) pouvant être élargi radialement, qui présente au moins une première langue radiale (22), comprenant les étapes suivantes :
- prémontage du collier à ressort (16) sur une portion de prémontage (18) du premier corps creux (12) afin de fixer une position de prémontage,
- emboîtement axial l'un dans l'autre du premier et du deuxième corps creux (12, 14), et
- rotation du collier à ressort (16) par rapport au premier corps creux (12), de telle sorte que le collier à ressort parvienne dans une position de montage final dans laquelle la première langue radiale (22) vient en prise dans une rainure périphérique (24) du premier corps creux (12),
**caractérisé en ce que**
la première langue radiale (22) vient également en prise dans la rainure périphérique (24) du premier corps creux (12) dans la position de prémontage de telle sorte que le collier à ressort (16) soit fixé dans la position de prémontage dans la direction axiale sur le premier corps creux (12).

2. Agencement de raccord enfichable (10) pour la mise en oeuvre du procédé selon la revendication 1, comprenant un premier corps creux (12) tel qu'une tubulure et un deuxième corps creux (14) tel qu'un tuyau souple, et comprenant un collier à ressort (16) pouvant être élargi radialement pour connecter le premier corps creux (12) au deuxième corps creux (14), le premier corps creux (12) présentant une première portion de prémontage (18) sur laquelle le collier à ressort (16) peut être prémonté dans une position de prémontage et le premier corps creux (12) présentant une portion de montage final (36) sur laquelle le collier à ressort (16) est fixé pour la connexion du premier corps creux (12) au deuxième corps creux (14) dans une position de montage final, la première portion (18) et la portion de montage final (36) étant disposées de manière décalée dans la direction périphérique (38) du premier corps creux (12) de telle sorte que le collier à ressort (16) puisse être amené par rotation par rapport au premier corps creux (12) de la position de prémontage dans la position de montage final, le collier à ressort (16) présentant au moins une première langue radiale (22) qui vient en prise dans la position de montage final dans une rainure périphérique (24) du premier corps creux (12),
**caractérisé en ce que**
la première langue radiale (22) vient également en prise dans la position de prémontage dans la rainure périphérique (24) du premier corps creux (12) de telle sorte que le collier à ressort (16) soit fixé dans la position de prémontage dans la direction axiale sur le premier corps creux (12).

3. Agencement de raccord enfichable selon la revendication 2, **caractérisé en ce que** la portion de prémontage (18) présente un plus grand diamètre extérieur que la portion de montage final (36), de telle sorte que le deuxième corps creux (14) puisse être poussé axialement sur le premier corps creux (12) de telle sorte qu'au moins une portion du deuxième corps creux (14) soit disposée radialement à l'intérieur du collier (16) se trouvant dans la position de prémontage.

4. Agencement de raccord enfichable selon la revendication 2 ou 3, **caractérisé en ce que** la portion de prémontage (18) et la portion de montage final (36) sont connectées l'une à l'autre dans la direction périphérique par le biais d'un contour périphérique (32).

5. Agencement de raccord enfichable selon la revendication 4, **caractérisé en ce que** le contour périphérique (32) entre la portion de prémontage (18) et la portion de montage final (36) présente une portion de fixation (34).

6. Agencement de raccord enfichable selon la revendication 5, **caractérisé en ce que** la portion de fixation (34) présente un plus grand diamètre extérieur que la portion de prémontage (18).

7. Agencement de raccord enfichable selon l'une quelconque des revendications 2 à 6, **caractérisé en ce que** le collier à ressort (16) est sous tension dans la position de prémontage.

8. Agencement de raccord enfichable selon l'une quelconque des revendications 2 à 7, **caractérisé en ce que** le collier à ressort (16) présente en outre au moins une deuxième langue radiale (26) qui vient en prise dans la position de montage final dans une rainure radiale (28) du deuxième corps creux (14).

9. Agencement de raccord enfichable selon la revendication 8, **caractérisé en ce que** la deuxième langue radiale (26) est plus courte que la première langue radiale (22).

10. Agencement de raccord enfichable selon l'une quelconque des revendications 2 à 9, **caractérisé en ce que** le premier et/ou le deuxième corps creux (12, 14) présente une rainure périphérique (54) dans laquelle est incorporée une bague d'étanchéité (52) et qui est recouverte dans l'état de montage final par l'autre corps creux (12, 14), afin d'étanchéifier l'intérieur du corps creux (12, 14) par rapport à l'environnement.
